# EUROPEAN PATENT SPECIFICATION

(11) **EP 1 686 695 B1**
(45) Date of publication and mention of the grant of the patent: **30.07.2008**
(21) Application number: 05001360.6
(22) Date of filing: 24.01.2005
(51) Int. Cl.: H04B 1/38

(54) **Extended microphone with lighting device**
Ausgestrecktes Mikrofon mit Beleuchtungsvorrichtung
Microphone extensible avec un dispositif d'illumination

(43) Date of publication of application: 02.08.2006
(73) Proprietor: Jdi Jing Deng Industrial Co., Ltd., Taipei Hsien (TW)
(72) Inventor: Chen, Kuo-Chung, Wu-Gu Shiang Taipei Hsien (TW)
(74) Representative: Becker Kurig Straus

(56) References cited:
- US-A- 4 178 547
- US-B1- 6 658 273

## Description

### BACKGROUND OF THE INVENTION

### (a) Field of the Invention

This invention relates to an extended microphone, and more particularly to an extended microphone with a lighting device applied in a radio communication equipment.

### (b) Description of the Prior Art

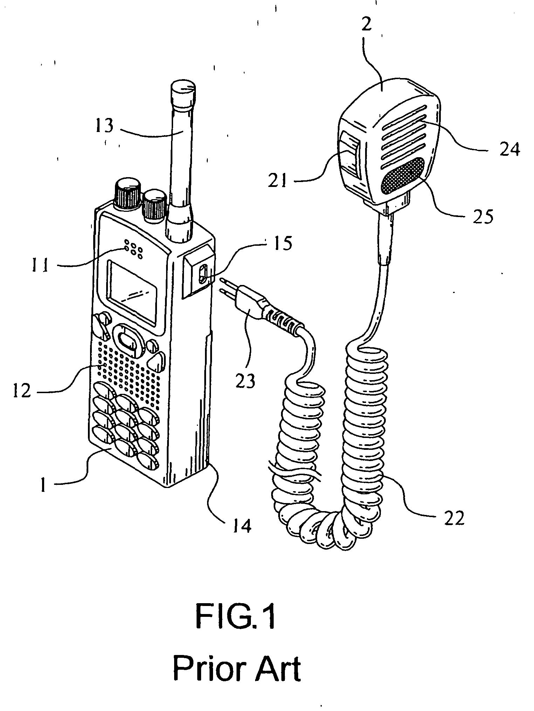

Generally speaking, radio communication equipments are used for transmitting and receiving voice messages. According to the prior art, radio communication equipments could include at least a transmitter, a receiver, a microphone and a loud speaker. As shown in Fig. 1, the traditional radio communication equipment 1 includes a microphone 11, a loud speaker 12, an aerial 13 and a power set 14, wherein a transmitter and a receiver (not shown in Fig. 1) are also included therein for transmitting and receiving voice messages. This kind of radio communication equipments always is provided powder via batteries; but some radio communication equipments disposed in a car are provided powder via the powder of the car.

When a user speaks to a microphone, his voice messages are transferred into electronic messages. These electronic messages are produced by the transmitter and amplified into radio messages for transmitting to the aerial, and then the radio messages are transmitting into air via the aerial. On the other hand, the aerial of accepting side will receive the radio messages and transmit them to the receiver thereof. The receiver further transfers the radio messages into the original voice message, and then the voice messages are broadcasted via the loud speaker of the radio communication equipment, thereby accepting-side user being able to hear the original voice message from remote user.

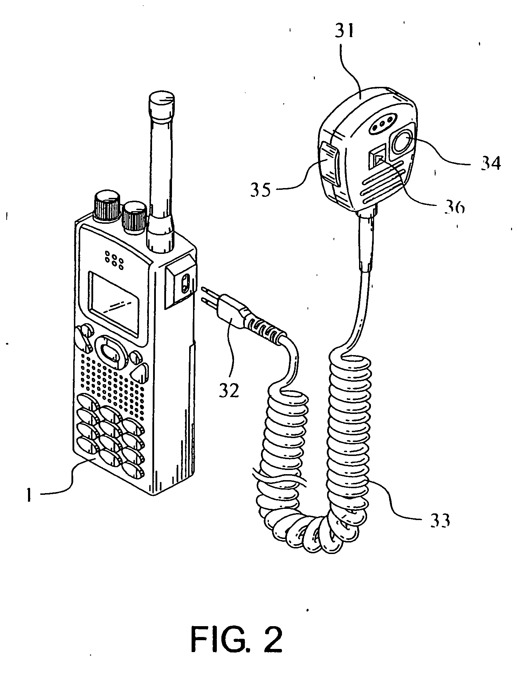

In practice, the volume and the weight of the radio communication equipment are too large to be held or carry. Therefore, the radio communication is always performed with an extended microphone 2, as shown in Fig. 2, for facilitating to be performed. Meanwhile the extended microphone 2 further includes a control button 21, an extended line 22, an adapter 23, a microphone 23 and a loud speaker 25. The extended microphone works by means of inserting the adapter 23 of the extended microphone into an interface hole 15 of the radio communication equipment. However, the extended microphone of prior art is introduced for facilitating to perform, but without adding another new functions.

On the other hand, there is no lighting device disposed on the radio communication equipment according to the prior art. It isn't convenient to operate the radio communication equipment in the dark. Furthermore, the user can't look about via the radio communication equipment.

Because the prior radio communication equipment is limited in radio communication system, it can't provide an additional lighting service. Therefore, it needs to provide an extended microphone, which is capable of being attached to a radio communication system and providing the lighting service, and can rectify those drawbacks of the prior art and solve the above problems. Meanwhile a traditional radio communication equipment could provide the lighting service by means of introducing the extended microphone according to the present invention without disassembling the radio communication equipment for adding extra functions.
The document US-A-4 178 547 discloses a microphone, which may be hand held for use in association with a radio transceiver, including transceivers commonly known as Citizen Band Radios, having means associated with the microphone for selecting and indicating the receiving or broadcasting channel of the transceiver.
The document US-B1-6 658273 discloses an apparatus including a cordless electronic device and a power source. A light source is mounted on the electronic device and is electrically connected to the power source. An on/off switch is also connected to the light source. The light source directs light away from the electronic device without passing such light through an information display screen. The power source may or may not include the power source for the electronic device, but it is typically a battery. In one embodiment the light source includes a fiber optic lead directing light from an information display light source of the electronic device. Preferably the electronic device is a cordless telephone, but it may be some other type of electronic device. In one embodiment, a portion of the light source is mounted on an antenna of the cordless telephone so that it can easily be directed by a user of the telephone. The apparatus may include multiple light sources where one light source is a laser light source and the other light source is a non-laser light source

### SUMMARY OF THE INVENTION

This paragraph extracts and compiles some features of the present invention; other features will be disclosed in the follow-up paragraph. It is intended to cover various modifications and similar arrangements included within the spirit and scope of the appended claims, and this paragraph also is considered to refer.

It is an object of the present invention to provide an extended microphone for a radio communication equipment, wherein a lighting module is introduced into the extended microphone for providing a light source without refitting the radio communication equipment.

According to the present invention, the extended microphone for a radio communication equipment, includes a microphone body; an adapter for connecting the extended microphone with the radio communication equipment; an extended line connected between the microphone body and the adapter; and a lighting module disposed on the microphone body for providing a light source while the extended microphone is connected with the radio communication equipment via the adapter.

Preferably, the extended microphone further includes a voice-receiving button connected to the microphone body for enabling the microphone body to receive a voice message, wherein the voice message is further transmitted into the radio communication equipment.

Preferably, the extended microphone further includes a light button disposed on the microphone body and connected with the lighting module for controlling the lighting module to radiate.

Preferably, the extended microphone further includes a power source set connected with the lighting module for providing the lighting module with an individual power.

Certainly, the lighting module can be one selected from a group of a high-power luminary, an incandescent lamp, and a LED luminary.

According to the present invention, the extended microphone for a radio communication equipment, at least includes a microphone body; an adapter connected with the microphone body for linking the extended microphone and the radio communication equipment; and a lighting module disposed on the microphone body for providing a light source while the extended microphone and the radio communication equipment are linked via the adapter.

Preferably, the extended microphone further includes a voice-receiving button connected to the microphone body for enabling the microphone body to receive a voice message, wherein the voice message is further transmitted into the radio communication equipment.

Preferably, the extended microphone further includes a light button disposed on the microphone body and connected with the lighting module for controlling the lighting module to radiate.

Preferably, the extended microphone further includes a power source set connected with the lighting module for providing the lighting module with an individual power.

Certainly, the lighting module can be a high-power luminary.

Certainly, the lighting module can be an incandescent lamp.

Certainly, the lighting module can be a LED luminary.

Preferably, the extended microphone further includes an extended line connected between the microphone body and the adapter.

According to the present invention, the extended microphone for a radio communication equipment, includes a microphone body; an adapter for connecting the extended microphone with the radio communication equipment; an extended line connected between the microphone body and the adapter; a lighting module disposed on the microphone body; a power source set connected with the light module; and a light button disposed on the microphone body and connected with the lighting module for controlling the lighting module to radiate and provide a light source.

Certainly, the power source set can be a battery.

Certainly, the lighting module can be a high-power luminary.

Certainly, the lighting module can be an incandescent lamp.

Certainly, the lighting module can be a LED luminary.

The above objects and advantages of the present invention will become more readily apparent to those ordinarily skilled in the art after reviewing the following detailed description and accompanying drawings, in which:

### BRIEF DESCRIPTION OF THE DRAWINGS-->

Fig. 1 illustrates an extended microphone for a radio communication equipment according to the prior art;
Fig. 2 illustrates a first embodiment of an extended microphone with a lighting module for a radio communication equipment according to the present invention;
Fig. 3 illustrates a second embodiment of an extended microphone with a lighting module for a radio communication equipment according to the present invention; and
Fig. 4 illustrates a third embodiment of an extended microphone with a lighting module for a radio communication equipment according to the present invention.

### DETAILED DESCRIPTION OF THE PREFERRED EMBODIMENT

The present invention discloses an extended microphone for a radio communication equipment, and the objects and advantages of the present invention will become more readily apparent to those ordinarily skilled in the art after reviewing the following detailed description. The present invention needs not be limited to the following embodiment.

Please refer to Fig. 2. It illustrates a first embodiment of an extended microphone with a lighting module for a radio communication equipment according to the present invention. The extended microphone for a radio communication equipment, includes a microphone body 31; an adapter 32 for connecting the microphone body 31 with the radio communication equipment 1; an extended line 33 connected between the microphone body 31 and the adapter 32; and a lighting module 34 disposed on the microphone body 31 for providing a light source while the microphone body 31 is connected with the radio communication equipment 1 via the adapter 32.

In practice, the extended microphone further includes a voice-receiving button 35 connected to the microphone body 31 for enabling the microphone body 31 to receive a voice message, wherein the voice message is further transmitted into the radio communication equipment 1. The lighting module of the present invention can be enabled by means of inserting the adapter 32 into the radio communication equipment 1. Certainly, the extended microphone could further include a light button 36 disposed on the microphone body 31 and connected with the lighting module 34 for controlling the lighting module 34 to radiate. Meanwhile, the lighting module 34 can be a high-power luminary, i.e. a LED luminary.

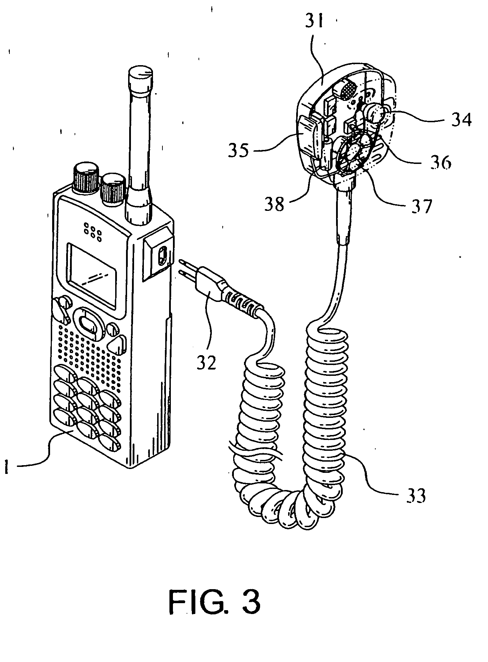

Please refer to Fig. 3. It illustrates a second embodiment of an extended microphone with a lighting module for a radio communication equipment according to the present invention. The extended microphone at least includes a microphone body 31; an adapter 32 for connecting the microphone body 31 with the radio communication equipment 1;and a lighting module 34 disposed on the microphone body 31 for providing a light source while the microphone body 31 is connected with the radio communication equipment 1 via the adapter 32. Similarly, the extended microphone further includes a voice-receiving button 35 connected to the microphone body 31 for enabling the microphone body 31 to receive a voice message, wherein the voice message is further transmitted into the radio communication equipment 1. On the other hand, the extended microphone further includes a loud speaker connected with the adapter 32 for receiving a received voice message and broadcasting the received voice message therefrom.

In practice, the extended microphone could further include a light button 36 disposed on the microphone body 31 and connected with the lighting module 34 for controlling the lighting module 34 to radiate.

Therefore, the extended microphone can further include a power source set 38 connected with the lighting module 34 for providing the lighting module 34 with an individual power, wherein the power source set 38 is a battery. Furthermore, the lighting module 34 can be an incandescent lamp; and the microphone body 31 and the adapter 32 can be connected via an extended line 33.

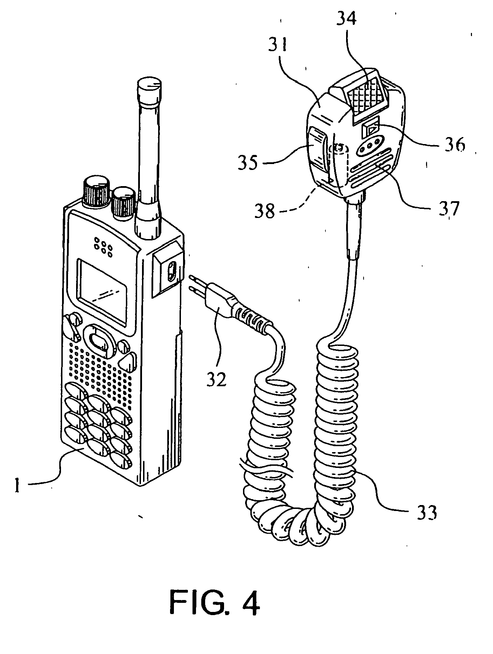

Please refer to Fig. 4. It illustrates a third embodiment of an extended microphone with a lighting module for a radio communication equipment according to the present invention. The extended microphone includes at least a microphone body 31; an adapter 32 for connecting the microphone body 31 with the radio communication equipment 1; an extended line 33 connected between the microphone body 31 and the adapter 32; a lighting module 34 disposed on the microphone body 31; a power source set 38 connected with the lighting module 34; and a light button 36 disposed on the microphone body 31 and connected with the lighting module 34 for controlling the lighting module 34 to radiate. Preferably, in this embodiment, the lighting module 34 can be controlled by means of rotating to electrify and enabled to radiate. Meanwhile the lighting module 34 can be a high-power luminary, i.e. a LED luminary or an incandescent lamp.

Accordingly, the present invention provides an extended microphone for a radio communication equipment by introducing a lighting module thereby providing a lighting function without refitting the relative radio communication equipment. Obviously, the present invention possesses many outstanding characteristics, effectively improves upon the drawbacks associated with the prior art in practice and application, produces practical and reliable products, bears novelty, and adds to economical utility value.

Therefore, the present invention exhibits a great industrial value.

While the invention has been described in terms of what is presently considered to be the most practical and preferred embodiments, it is to be understood that the invention needs not be limited to the disclosed embodiment.

## Claims

1. An external microphone (2) for a radio communication equipment, at least comprising:
a microphone body (31);
an adapter (32) connected with said microphone body (31) for linking said external microphone (2) and said radio communication equipment (1); and
a lighting module (34) disposed on said microphone body (31) for providing a light source while said external microphone (2) and said radio communication equipment (1) are linked via said adapter (32), **characterized in** further comprising
a high-power luminary and
a power source set (38) connected with said lighting module (34) for providing said lighting module (34) with an individual power.

2. The external microphone (2) according to claim 1 further comprising a voice-receiving button (35) connected to said microphone body (31) for enabling said microphone body (31) to receive a voice message, wherein said voice message is further transmitted into said radio communication equipment (1).

3. The external microphone (2) according to claim 1 further comprising a light button (36) disposed on said microphone body (31) and connected with said lighting module (34) for controlling said lighting module (34) to radiate.

4. The external microphone (2) according to claim 1, wherein said lighting module (34) is an incandescent lamp.

5. The external microphone (2) according to claim 1, wherein said lighting module (34) is a LED luminary.

6. The external microphone (2) according to claim 1 further comprising an external line (33) connected between said microphone body (31) and said adapter (32).

## Patentansprüche

1. Externes Mikrophon (2) für eine Funkkommunikationsausrüstung, mindestens umfassend:
einen Mikrophonkörper (31);
einen Adapter (32), der mit dem Mikrophonkörper (31) verbunden ist, um das externe Mikrophon (2) und die Funkkommunikationsausrüstung (1) miteinander zu verbinden; und
ein Beleuchtungsmodul (34), welches auf dem Mikrophonkörper (31) angeordnet ist, um eine Lichtquelle bereitzustellen, während das externe Mikrophon (2) und die Funkkommunikationsausrüstung (1) mittels des Adapters (32) verbunden sind, dadruch **gekennzeichnet**, dass es weiterhin umfasst
eine Hochenergiebeleuchtung und
eine Energiequelle (38), welche mit dem Beleuchtungsmodul (34) verbunden ist, um das Beleuchtungsmodul (34) mit einer separaten Energie zu versorgen.

2. Externes Mikrophon (2) nach Anspruch 1, weiterhin umfassend eine Sprachempfangstaste (35), die mit dem Mikrophonkörper (31) verbunden ist, um dem Mikrophonkörper (31) zu ermöglichen, eine Stimmnachricht zu empfangen, wobei die Stimmnachricht in die Funkkommunikationsausrüstung (1) weiter übermittelt wird.

3. Externes Mikrophon (2) nach Anspruch 1, weiterhin umfassend eine Lichttaste, die auf dem Mikrophonkörper (31) angeordnet ist, und mit dem Beleuchtungsmodul (34) verbunden ist, um das Beleuchtungsmodul (34) so zu steuern, dass es leuchtet.

4. Externes Mikrophon (2) nach Anspruch 1, wobei das Beleuchtungsmodul (34) eine Glühlampe ist.

5. Externes Mikrophon (2) nach Anspruch 1, wobei das Beleuchtungsmodul (34) eine LED-Lampe ist.

6. Externes Mikrophon (2) nach Anspruch 1, weiterhin umfassend eine externe Leitung (33), welche mit dem Mikrophonkörper (31) und dem Adapter (32) verbunden ist.

## Revendications

1. Microphone externe (2) pour équipement de communication radio, comprenant au moins :
un corps de microphone (31) ;
un adaptateur (32) connecté audit corps de microphone (31) permettant de relier ledit microphone externe (2) et ledit équipement de communication radio (1) ; et
un module d'éclairage (34) disposé sur ledit corps de microphone (31) fournissant une source de lumière tandis que ledit microphone externe (2) et ledit équipement de communication radio (1) sont reliés par le biais dudit adaptateur (32), **caractérisé en ce qu'**il comprend en outre
une luminaire haute puissance et
un groupe d'alimentation (38) connecté audit module d'éclairage (34) pour assurer audit module d'éclairage (34) une alimentation individuelle.

2. Microphone externe (2) selon la revendication 1 comprenant en outre un bouton de réception vocale (35) connecté audit corps de microphone (31) destiné à permettre audit corps de microphone (31) de recevoir un message vocal, ledit message vocal étant ensuite transmis audit équipement de communication radio (1).

3. Microphone externe (2) selon la revendication 1 comprenant en outre un bouton (36) disposé sur ledit corps de microphone (31) et connecté audit module d'éclairage (34) pour régler le rayonnement dudit module d'éclairage (34).

4. Microphone externe (2) selon la revendication 1, ledit module d'éclairage (34) étant une lampe incandescence.

5. Microphone externe (2) selon la revendication 1, ledit module d'éclairage (34) étant un luminaire DEL.

6. Microphone externe (2) selon la revendication 1 comprenant en outre un circuit externe (33) connecté entre ledit corps de microphone (31) et ledit adaptateur (32).
